# DEMANDE DE BREVET EUROPEEN

(11) **EP 1 158 715 A1**
(43) Date de publication de la demande: **28.11.2001**
(21) Numéro de dépôt: 01401352.8
(22) Date de dépôt: 22.05.2001
(51) Int. Cl.: H04L 1/00, H04L 29/08

(54) **Méthode de transmission de données combattant la dégradation de la qualitée de service**

(30) Priorité: 25.05.2000 FR 0006804
(71) Demandeur: Mitsubishi Electric Information Technology Centre Europe B.V., 1101 AG Amsterdam Zuidoost (NL)
(72) Inventeur: Seguin, Laure, 35700 Rennes (FR)
(74) Mandataire: Maillet, Alain

(57) **Abrégé**

La présente invention est relative à une méthode de transmission de données sur une ressource physique utilisant
- une couche (RRC) responsable de la gestion de la ressource physique et de la garantie de la qualité de service ;
- une sous-couche (RLC) responsable de la fourniture d'un support de transmission conforme à la qualité de service requise ;
- une sous-couche (MAC) responsable de l'accès à la ressource physique ;
- une couche physique (PHY) responsable du traitement physique des données ;

l'accès à la ressource physique étant divisé en intervalles de temps de transmission (TTI) ;
la sous-couche (RLC) étant apte à segmenter les données en unités de transmission (RLC PDU) ;
la sous-couche (MAC) étant apte à transmettre au moins une unité de transmission par intervalle de temps de transmission ;
caractérisée en ce qu'en cas de dégradation des conditions de transmission sur la ressource physique la taille des unités de transmission est réduite.

## Description

La présente invention concerne de manière générale une méthode de transmission des données sur une ressource physique. Plus précisément la présente invention concerne une méthode de transmission combattant la dégradation de la qualité de service dans un système de télécommunication radiomobile.

Un tel système est constitué d'un ou plusieurs récepteurs reliés à un ou plusieurs émetteurs par des liaisons radio. La capacité de transmission d'un tel système est limitée par le niveau de bruit, les interférences entre les signaux des différents utilisateurs, la bande passante disponible etc. Elle doit donc être partagée entre les différents utilisateurs selon un processus d'allocation de ressources permettant à chaque utilisateur de disposer au mieux des services qu'il a demandés.

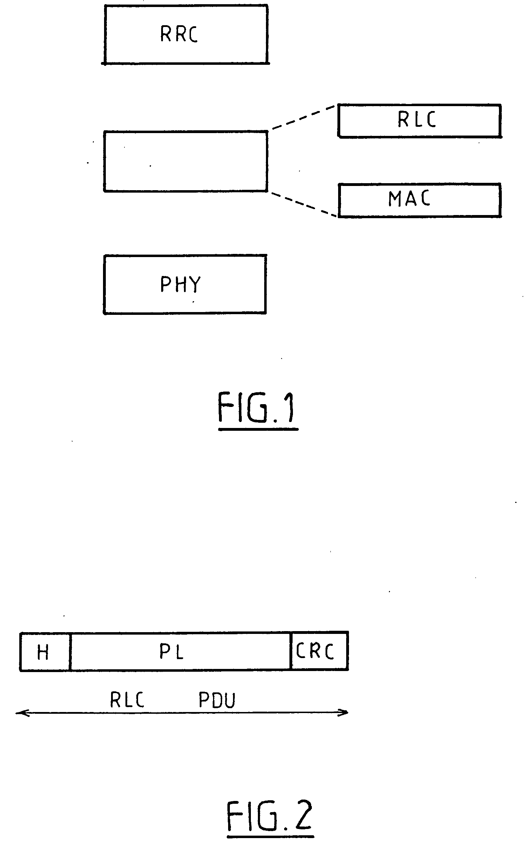

Pour cela, un système de télécommunication radiomobile met en oeuvre trois couches de protocole comme représenté en Fig. 1.

La couche supérieure ou couche RRC (Radio Resource Control) est chargée de gérer l'ensemble de la ressource physique et de garantir la qualité de service (QoS) pour les services des différents utilisateurs. La qualité de service définit en particulier le délai maximum d'acheminement ainsi que le taux d'erreur des unités de données du service, encore appelées SDU (Service Data Unit).

La couche 2 est divisée en une sous-couche RLC (Radio Link Control) et une sous-couche MAC (Medium Access Control).

La sous-couche RLC est chargée de fournir aux différentes applications un support de transmission conforme à la qualité de service garantie par la couche RRC. La sous-couche RLC peut opérer selon différents modes. Le premier mode dit transparent (Transparent Mode ou TM) se divise lui-même en deux sous-modes. Selon le premier sous-mode, la couche RLC peut segmenter les unités SDU pour générer des paquets de données ou unités de transmission appelées RLC PDU (RLC Protocol Data Unit). Selon un second sous-mode, cette segmentation n'est pas autorisée et une unité RLC PDU doit correspondre à une unité SDU. Dans un second mode dit mode non acquitté (Unacknowledged Mode ou UM) elle peut non seulement segmenter les unités SDU mais aussi en concaténer les fragments pour générer des unités RLC PDU. Dans un troisième mode dit mode acquitté (Acknowledged Mode ou AM), elle peut en outre demander la retransmission des unités RLC PDU erronées. En particulier, lorsqu'elle fonctionne en mode acquitté, la couche RLC est responsable de la retransmission des unités erronées dont les erreurs n'ont pu être corrigées par le traitement physique. Cette retransmission est effectuée à nouveau sous forme d'unités de (re)transmission RLC PDU.

La structure d'une unité RLC PDU est illustrée en Fig. 2. Elle se présente sous la forme d'un paquet comprenant une charge utile constituée des données de service provenant d'une ou plusieurs unités SDU (selon le mode d'opération de la sous-couche RLC), un en-tête fournissant l'information de signalisation nécessaire à la couche RLC ainsi qu'un code de détection d'erreurs (CRC) permettant de détecter si le paquet est erroné ou non. Dans la plupart des systèmes de télécommunication radiomobile offrant un mode acquitté, la taille de l'unité de transmission RLC PDU est fixe pour toute la durée de la connexion. C'est le cas notamment pour le système de téléphonie mobile de troisième génération (UMTS) tel que spécifié dans la version 1999 de la norme.

La sous-couche MAC est chargée de l'accès à la ressource physique partagée. Si un utilisateur souhaite disposer simultanément de plusieurs services, la sous-couche MAC répartit ces services sur la ressource réservée par la couche RRC. L'accès à la ressource est divisé en intervalles de temps de transmission (Transmission Time Interval ou TTI). Pour un service donné, la sous-couche MAC peut envoyer un nombre NP de paquets, tous de même taille TP, pendant un intervalle de temps de transmission. Cependant la sous-couche MAC ne peut choisir n'importe quelles valeurs pour NP et TP. Les valeurs de NP et TP possibles sont imposées par la couche RRC et seules certaines combinaisons de ces valeurs sont autorisées par cette dernière. Les combinaisons possibles sont fournies par la couche RRC à la sous-couche MAC.

La couche 1 ou couche physique PHY est responsable du traitement physique des données. Elle comporte en particulier une fonction de codage/décodage correcteur d'erreurs qui lui permet de corriger la majeure partie des erreurs affectant les données transmises et de fournir aux couches supérieures un taux d'erreur résiduel faible. Par exemple, dans le système UMTS, le codage/ décodage utilisé pour les services bénéficiant du mode acquitté de la couche RLC est un turbo-codage/ décodage. L'unité de traitement de la couche physique étant l'intervalle de temps de transmission TTI, les données des paquets à transmettre sont entrelacées au sein de cet intervalle, ce qui conduit à une répartition uniforme des erreurs résiduelles sur la durée du TTI.

Dans un système de télécommunication radiomobile de type à accès multiple par répartition de code (CDMA) comme celui de l'UMTS, les puissances de transmission de chacun des signaux émis (par les stations de base ou bien par les mobiles) doivent être ajustées afin que le niveau de rapport signal à bruit plus interférence atteigne le niveau requis par la qualité de service. Pour un récepteur donné, le rapport signal à bruit plus interférence est défini comme étant égal au rapport entre le niveau de signal reçu avec le niveau de bruit de fond plus le niveau d'interférence totale reçue.

Toutefois, comme les puissances de transmission sont bornées, il peut se produire que le système d'allocation de ressources ne puisse garantir la qualité de service en augmentant la puissance d'émission du signal correspondant. Dans un tel cas, le taux d'erreur binaire augmente sensiblement et le taux d'erreur résiduel sur les paquets (BLER) peut dépasser un seuil admissible. Chaque paquet erroné donnant lieu à une requête en retransmission, le débit efficace tend alors vers zéro.

Pour faire face à un tel phénomène de congestion, diverses solutions ont été proposées comme celle de bloquer certains appels ou de diminuer fortement le débit de certains émetteurs. Ces solutions ne sont toutefois pas satisfaisantes dans la mesure où elles ne garantissent pas que le délai d'acheminement des données n'excède pas le délai maximum fixé par la qualité de service.

La présente invention a pour but de remédier aux inconvénients précités et notamment de proposer une méthode de transmission qui garantisse du débit à un service en dépit de la dégradation des conditions de transmission, alors même qu'il n'est plus possible d'augmenter la puissance d'émission du signal supportant ledit service.

A cet effet, la méthode de transmission selon l'invention est caractérisée en ce que la taille des unités de transmission RLC PDU est réduite lorsque les conditions de transmission sont dégradées.

Selon un premier mode de réalisation de l'invention, la couche RRC détermine, au début d'une connexion, une pluralité de tailles d'unités de transmission possibles pour un intervalle de temps de transmission donné et la sous-couche RLC sélectionne, parmi cette pluralité, une taille d'unité de transmission en fonction des conditions de transmission, une taille plus faible étant sélectionnée en cas de dégradation des conditions de transmission.

Selon un second mode de réalisation de l'invention la couche (RRC) fixe au début d'une connexion une taille d'unité de transmission en fonction des conditions de transmission. En cas de dégradation des conditions de transmission, la couche RRC du réseau initie une procédure de changement de la taille de transmission.

D'autres modes de réalisation de l'invention sont donnés par les revendications dépendantes.

La présente invention concerne également un système de télécommunication UMTS utilisant la méthode de transmission susmentionnée.

Les caractéristiques de l'invention mentionnées ci-dessus, ainsi que d'autres, apparaîtront plus clairement à la lecture de la description faite en relation avec les dessins joints, parmi lesquels :
La Fig. 1 représente les couches de protocole utilisées par un système de télécommunication radiomobile ;
La Fig. 2 représente la structure d'une unité de transmission de la couche RLC ;
La Fig. 3 représente schématiquement un premier mode de réalisation de l'invention ;
La Fig. 4 représente schématiquement un second mode de réalisation de l'invention ;
La Fig. 5 représente schématiquement une procédure de changement de taille de RLC PDU utile à la mise en oeuvre du second mode de réalisation de l'invention.

La méthode de transmission selon l'invention propose de diminuer la taille de l'unité de transmission de la sous-couche RLC lorsque les conditions de transmission se dégradent. Selon un premier mode de réalisation de l'invention la taille de l'unité de transmission est choisie par la sous-couche MAC parmi un ensemble de tailles possibles. Selon un second mode de réalisation le changement de taille de l'unité de transmission fait systématiquement intervenir la couche RRC.

De manière générale la taille de l'unité de transmission RLC PDU n'est pas choisie arbitrairement. En effet, pour un taux d'erreur (BER) donné, un intervalle de temps de transmission (TTI) et un débit binaire donnés, on peut montrer qu'il existe une taille optimale de l'unité RLC PDU. Les erreurs résiduelles, c'est à dire les erreurs non corrigées par le décodage correcteur d'erreur de la couche physique, étant réparties uniformément sur la longueur de l'intervalle TTI, la probabilité qu'une unité RLC PDU ne soit pas erronée est une fonction exponentiellement décroissante de sa taille L. Une unité RLC PDU contient L-ovhd bits utiles où ovhd est la taille cumulée de l'en-tête et du code CRC. Le débit efficace est donc en première approximation proportionnel à (L-ovhd)/L* exp(-L*BER). Si la taille L de l'unité de transmission est faible le débit efficace est faible car le nombre de bits utiles est lui-même faible. De même, si la taille L est trop élevée le débit efficace est faible à cause de la probabilité de perte élevée des unités RLC PDU.

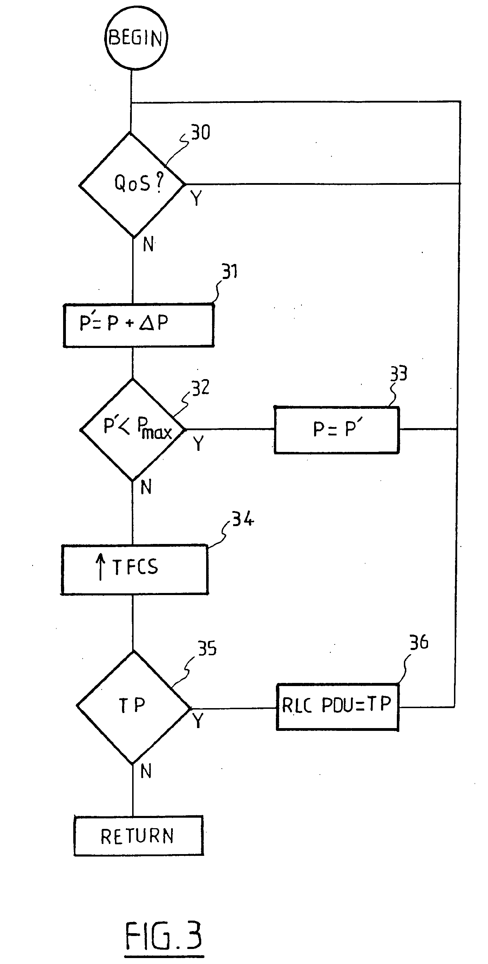

La Fig. 3 représente schématiquement une méthode de transmission selon le premier mode de réalisation.

Lors de l'établissement d'une connexion, la couche RRC fournit à la sous-couche MAC un ensemble de tailles possibles pour l'unité de transmission RLC PDU. Plus précisément, si le système de télécommunication radiomobile est un système UMTS, la couche RRC fournit à la sous-couche MAC, d'une part, une table TFS (Transport Format Set) par canal de transport et, d'autre part, une table TFCS (Transport Format Combination Set) relative à l'ensemble des canaux de transport que ladite sous-couche peut utiliser. Une table TFS relative à un canal de transport consiste en un ensemble de couples (TPⱼ,Nⱼ)_{j=1..n} où TPⱼ est une taille possible de l'unité RLC PDU pour ce canal, Nⱼ est le nombre d'unités RLC PDU associé à cette taille que la sous-couche MAC peut transmettre dans un intervalle de temps TTI et n le nombre de couples possibles sur ce canal. La table TFCS est relative à l'ensemble des canaux de transport et comprend une pluralité de combinaisons TFCᵢ de formats de transports possibles, chaque combinaison TFCᵢ consistant en un ensemble de couples {(TP_{1,i},N_{1,i}),... (TP_{k,i},N_{k,i}),...(TP_{m,i},N_{m,i})} où m est l'ensemble de canaux utilisables et où un couple (TP_{k,i}, N_{k,i}) appartient à table TFS du canal k, La table TFCS décrit donc en particulier les combinaisons de tailles possibles d'unités RLC PDU pour l'ensemble des canaux de transport, une combinaison pouvant être sélectionnée à chaque intervalle de temps TTI par la sous-couche MAC. La combinaison sélectionnée par la sous-couche MAC est repérée par un pointeur TFCI dans la table TFCS. Ce pointeur est transmis au récepteur à chaque trame physique (10ms) sur le canal de contrôle DPCCH.

Dans un premier temps (30) la sous-couche MAC de l'émetteur vérifie si la qualité de service requise (QoS) est bien respectée en comparant le taux d'erreur par unité RLC PDU à une valeur seuil. Le taux d'erreur peut être obtenu par exemple à partir des rapports d'état envoyés par le récepteur. Alternativement, le respect de la qualité de service sera vérifié à partir de la convergence du contrôle de puissance en boucle fermée. En effet, dans le système UMTS chaque trame de transmission est divisée en tranches (slots) correspondant à une période de contrôle (0.625 ms) de la puissance d'émission. Le récepteur indique (31) à chaque tranche si l'émetteur doit augmenter ou diminuer sa puissance afin d'atteindre le niveau de consigne SIRₜ fixé par la couche RRC. Si la puissance maximale est atteinte (32) et que le contrôle de puissance demande encore une augmentation de la puissance d'émission, cela signifie que le niveau de consigne ne peut être atteint et donc que la qualité de service n'est plus respectée.

Tant que la puissance maximale n'est pas atteinte (32), les instructions de la boucle de contrôle de puissance sont suivies (33). En revanche si cette puissance est atteinte et donc que la qualité de service n'est pas respectée, la sous-couche MAC recherche (34) dans la table TFCS la taille TP de RLC PDU inférieure à la taille courante et la combinaison (TP, N) qui correspond à un débit équivalent à celui en cours (TP₂*N₂ = TP₁*N₁). Si cette combinaison existe (35), la taille de la RLC PDU est alors fixée à la nouvelle taille correspondante (36).

La table TFCS étant déterminée au début de la connexion et connue tant de l'émetteur que du récepteur, le pointeur de combinaison TFCI étant également transmis à chaque intervalle TTI, le changement de taille ne nécessite pas d'échange d'information entre l'émetteur et le récepteur ni de signalisation supplémentaire en cours de connexion.

Avantageusement, le changement de taille de l'unité RLC PDU ne se fera qu'après avoir constaté que la situation de non respect de la qualité de service persiste au delà d'une durée de tolérance prédéterminée, ce de manière à éviter des changements intempestifs.

Avantageusement, la table TFS ne comportera que deux tailles d'unité RLC PDU : une première taille correspondant à des conditions de transmission normales sur le canal et une seconde taille correspondant à des situations de crise. Cette seconde taille pourra être déterminée de manière empirique en fonction de la moyenne des taux d'erreur BER observés lors de l'occurrence de ces situations.

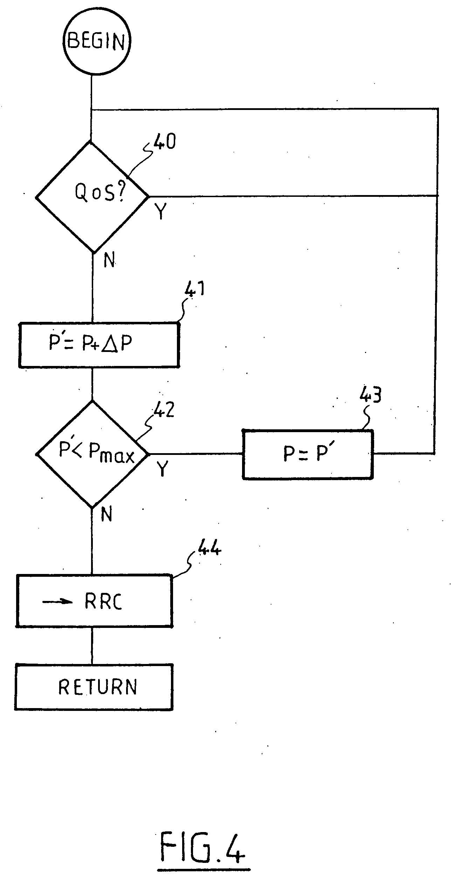

La Fig. 4 représente schématiquement une méthode de transmission selon un second mode de réalisation.

Selon ce mode de réalisation, la taille de l'unité RLC PDU est fixée en début de connexion par la couche RRC. Les sous-couches RLC et MAC sont alors configurées en fonction de cette taille.

A la différence du premier mode de réalisation, la sous-couche RLC ne fonctionne qu'avec une seule taille de PDU . La procédure de changement de taille de l'unité RLC PDU nécessite l'intervention de la couche RRC du réseau, que celui-ci fonctionne en émetteur ou en récepteur.

Dans un premier temps (40), le réseau vérifie si la qualité de service requise (QoS) est bien respectée en comparant le taux d'erreur par unité RLC PDU à une valeur seuil. Si le réseau fonctionne en émetteur, le taux d'erreur sera fourni comme précédemment par les rapports d'état envoyés par le récepteur. Si le réseau fonctionne en récepteur, le taux d'erreur sera fourni par la sous-couche RLC du réseau. Alternativement, le respect de la qualité de service est vérifié à partir de la convergence du contrôle de puissance en boucle fermée. Si le réseau fonctionne en émetteur et que le terminal mobile demande une augmentation de puissance (41) alors que la puissance maximale est déjà atteinte, la qualité de service ne peut plus être respectée. De même si le réseau fonctionne en récepteur et que le terminal mobile a atteint sa puissance d'émission maximale, le réseau en sera averti par un rapport de mesures envoyé par le terminal.

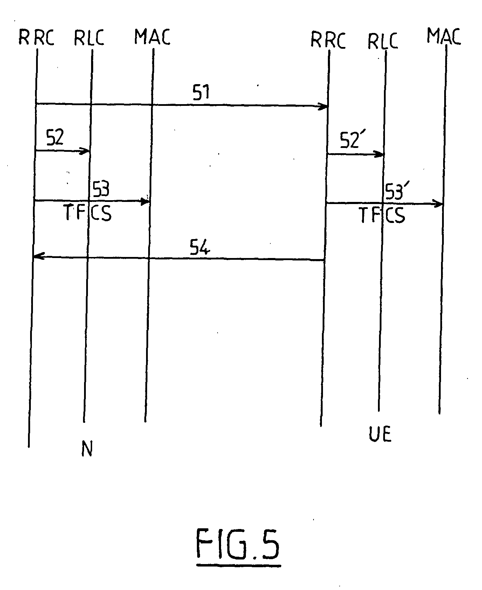

Dans les deux cas, si la puissance maximale (42) est atteinte et qu'une augmentation de la puissance d'émission serait nécessaire pour maintenir la qualité de service la procédure de changement de la taille de l'unité RLC PDU est initiée (44). Cette procédure est illustrée en Fig. 5.

Dans un premier temps, la couche RRC du réseau (N) envoie un ordre de reconfiguration (51) à la couche RRC du terminal mobile (UE). Les sous-couches RLC et MAC de l'émetteur et du récepteur sont alors respectivement configurées (52, 52',53,53') pour se conformer à cette nouvelle taille. Après reconfiguration, la couche RRC du terminal envoie (54) un message d'acquittement à la couche RRC du réseau. Si le système de télécommunication radiomobile est un système UMTS, les sous-couches MAC reçoivent des couches RRC une nouvelle table TFCS donnant les nouvelles combinaisons de formats de transport possibles. Ces nouvelles combinaisons indiqueront la nouvelle taille de RLC PDU que la sous-couche MAC peut utiliser.
Supposons par exemple que nous ayons trois canaux de transport de même TFS : {(320,2) ;(320,4) ;(320,6) ;(640,1) ;(640,2) ;(640,3)} et qu'avant reconfiguration nous ayons la table TFCS suivante :
TFCS : {TFCᵢ} avec TFCᵢ : {(TP_{1,i},NP_{1,i}) ;(TP_{2,i}, NP_{2,i}) ;(TP_{3,i},NP_{3,i})} où TP_{1,i}=640 pour i=1..m. Ainsi pour le canal 1, seule la taille de RLC PDU de 640 bits est utilisée . Si la qualité de service n'est pas respectée, la couche RRC du réseau initiera une procédure reconfiguration et enverra une nouvelle table TFCS à la sous-couche MAC avec TP'_{1,i}=320 et NP'_{1,i}= 2*NP_{1,i}.

La méthode selon le premier ou le second mode de réalisation s'applique aux services utilisant la couche RLC selon un mode autorisant la segmentation. Comme nous l'avons vu plus haut ce sera le cas pour les modes acquitté et non acquitté ainsi que pour le premier sous-mode du mode transparent. Avantageusement, la méthode s'appliquera à des services utilisant le mode acquitté de la couche RLC. En effet pour ces services le délai d'acheminement des données n'est pas primordial et la méthode décrite leur permettra de conserver un débit non nul en cas de congestion et de respecter la qualité de service requise.

Enfin, la méthode selon le second mode de réalisation être utilisée comme méthode d'allocation indirecte de ressources. En effet, si la couche RRC du réseau baisse délibérément le niveau de consigne SIRₜ des services à faible priorité, services qui peuvent s'accommoder d'une baisse de ressources et pour lesquels le délai d'acheminement des données n'a qu'une faible importance, elle induira une dégradation des conditions de transmission pour ces services, dégradation qui sera suivie d'une diminution de la taille de l'unité RLC PDU. En jouant ainsi sur la valeur de consigne elle pourra indirectement moduler les ressources accordées à ces services.

## Revendications

1. Méthode de transmission de données sur une ressource physique utilisant
- une couche (RRC) responsable de la gestion de la ressource physique et de la garantie de la qualité de service ;
- une sous-couche (RLC) responsable de la fourniture d'un support de transmission conforme à la qualité de service requise ;
- une sous-couche (MAC) responsable de l'accès à la ressource physique ;
- une couche physique (PHY) responsable du traitement physique des données ;
l'accès à la ressource physique étant divisé en intervalles de temps de transmission (TTI) ;
la sous-couche (RLC) étant apte à segmenter les données en unités de transmission (RLC PDU);
la sous-couche (MAC) étant apte à transmettre au moins une unité de transmission par intervalle de temps de transmission ;
**caractérisé en ce qu'**en cas de dégradation des conditions de transmission sur la ressource physique la taille des unités de transmission est réduite.

2. Méthode de transmission de données selon la revendication 1 **caractérisée en ce qu'**au début d'une connexion entre un émetteur et un récepteur accédant à la ressource physique, la couche (RRC) détermine une pluralité de tailles d'unités de transmission possibles pour un intervalle de temps de transmission (TTI) et que la sous-couche (MAC) sélectionne parmi cette pluralité une taille d'unité de transmission en fonction des conditions de transmission, une taille plus faible étant sélectionnée en cas de dégradation des conditions de transmission sur la ressource physique.

3. Méthode de transmission de données selon la revendication 1 **caractérisée en ce qu'**au début d'une connexion entre un émetteur et un récepteur accédant à la ressource physique la couche (RRC) fixe une première taille d'unité de transmission (RLC PDU) en fonction des conditions de transmission et la transmet à la sous-couche (MAC).

4. Méthode de transmission de données selon la revendication 3 **caractérisée en ce qu'**en cas de dégradation des conditions de transmission sur la ressource physique la couche (RRC) fixe une seconde taille d'unité de transmission (RLC PDU) inférieure à la première et la transmet à la sous-couche (MAC).

5. Méthode de transmission de données selon l'une des revendications 1 à 4
**caractérisée en ce que** la couche (RRC) garantit une qualité de service en assignant un niveau de consigne SIRₜ au rapport puissance de signal reçu à bruit plus interférence ;
en cas de dégradation des conditions de transmission la puissance d'émission de l'émetteur est augmentée de manière à maintenir la qualité de service ;
la taille de l'unité de transmission (RLC PDU) est réduite lorsque la puissance d'émission atteint une valeur maximale.

6. Méthode de transmission de données selon les revendications 4 et 5
**caractérisée en ce que** la couche (RRC) procède à une allocation de ressources en baissant le niveau de consigne SIRₜ d'un service en fonction de l'inverse de son degré de priorité.

7. Méthode de transmission de données selon l'une des revendications précédentes **caractérisée en ce que** la couche (RLC) fonctionne en mode acquitté, une unité de transmission étant retransmis si l'acquittement n'est pas reçu.

8. Système de téléphonie mobile UMTS utilisant une méthode de transmission de données selon l'une des revendications précédentes.

9. Système de téléphonie mobile selon la revendication 8 utilisant une méthode de transmission de données selon la revendication 2 **caractérisée en ce que** la couche (RRC) fournit à la sous-couche (MAC) la pluralité de tailles possibles au moyen de la table TFCS.

10. Système de téléphonie mobile selon la revendication 8 utilisant une méthode de transmission de données selon la revendication 4 **caractérisée en ce que** la couche (RRC) fixe une seconde taille à l'unité de transmission en envoyant à la sous-couche (MAC) une nouvelle table TFCS.
